(19) Europäisches Patentamt

European Patent Office

Office européen des brevets

(11) Veröffentlichungsnummer: **0 253 947 B1**

(12) # EUROPÄISCHE PATENTSCHRIFT

(45) Veröffentlichungstag der Patentschrift: **25.03.92**

(21) Anmeldenummer: **87101149.0**

(22) Anmeldetag: **28.01.87**

(51) Int. Cl.⁵: **B60R 11/02**, H04B 1/08, H05K 11/02

(54) **Auto-Rundfunkgerät.**

(30) Priorität: **22.07.86 DE 3624716**

(43) Veröffentlichungstag der Anmeldung:
**27.01.88 Patentblatt 88/04**

(45) Bekanntmachung des Hinweises auf die
Patenterteilung:
**25.03.92 Patentblatt 92/13**

(84) Benannte Vertragsstaaten:
**AT CH DE FR GB IT LI**

(56) Entgegenhaltungen:
**EP-A- 0 108 270     EP-A- 0 116 780**
**DE-A- 1 630 341     FR-A- 2 447 299**
**FR-A- 2 519 832     US-A- 4 000 475**

(73) Patentinhaber: **GRUNDIG E.M.V. Elektro-
Mechanische Versuchsanstalt Max Grundig
& Co. KG.
Kurgartenstrasse 37
W-8510 Fürth(DE)**

(72) Erfinder: **Horn, Willy
i.Fa. Grundig E.M.V. Kurgartenstrasse 37
W-8510 Fürth(DE)**

EP 0 253 947 B1

Rank Xerox (UK) Business Services

## Beschreibung

Die vorliegende Erfindung bezieht sich auf ein Auto-Rundfunkgerät, das als Einschubteil ausgebildet ist und mit der Bedienungsseite sichtbar im Bereich des Armaturenbrettes eines Kraftfahrzeuges eingesetzt ist.

Es sind Auto-Rundfunkgeräte bekannt, die Einrichtungen aufweisen, um die weitere Funktionsfähigkeit eines widerrechtlich aus einem Kraftfahrzeug entnommenen Gerätes zu unterbinden. So ist ein Rundfunkgerät mit einem bedienbaren Baustein versehen, der die Inbetriebnahme des Gerätes nur nach Eingabe einer bestimmten Zahlenkombination über die Gerätetasten ermöglicht. Kann die entsprechende Codezahl jedoch nicht eingegeben werden, so bleibt das Gerät in einem unbrauchbaren Zustand. Nachteilig ist hierbei das Merken der Codezahl, insbesondere dann, wenn das Fahrzeug wechselweise von verschiedenen Personen gefahren werden soll.

Aus der europäischen Patentanmeldung 85201556.9 ist ein Autoradio bekannt, das aus einem Frontteil mit den zugeordneten Bedienungselementen besteht, wobei dieses Frontteil nur mit den Bedienelementen in Armaturenbrett des Kraftfahrzeuges eingesetzt ist, während sich der umfangreiche Geräte-Schaltungsteil auf einer gesonderten Schaltungsplatte befindet, die unabhängig vom Frontteil im rückwärtigen Bereich des Armaturenbrettes und mit dem Frontteil verdrahtet eingesetzt ist. Nachteilig ist bei einer derartigen Trennung von Geräteteilen, daß gegenüber einem üblichen kompletten Einschubteil ein erheblicher Montagemehraufwand erforderlich ist, insbesondere bei einem Reparaturfall durch das aufwendige Aus- und Einbauen des Schaltungsteils.

Weiterhin ist aus der EP-A1-0116780 ein Autoradio bekannt, welches eine Einrichtung zum Erschweren eines Diebstahls aufweist. Das Autoradio ist zweigeteilt. Es besitzt ein fest mit dem Auto verbundenes Geräteteil, das das Rundfunkempfangsteil und ein Kassettenlaufwerk mit Kassetten-Einschubschacht enthält, sowie ein zweites Teil, welches abnehmbar ist und die Bedienelemente, eine Anzeige und eine Beleuchtungseinrichtung enthält.

Beide Teile sind über steckbare Kontaktstellen miteinander verbunden. Nur wenn diese Verbindung besteht, ist das Autoradio komplett und funktionsfähig. Wird das abnehmbare Teil abgenommen, so ist das im Fahrzeug zurückbleibende fest eingebaute Teil nicht mehr funktionsfähig und somit für einen Dieb uninteressant und unbrauchbar.

Nachteilig ist bei einem solchen Gerät, daß die Verbindung des abnehmbaren Teils zum festen Teil nur über Steckverbindungen erfolgt und daß mit dem Einstecken eines beliebigen abnehmbaren Teils gleichen Typs das Gerät wieder funktionsfähig ist.

Aufgabe der Erfindung ist es, ein Auto-Rundfunkgerät zu schaffen, das in bisher bekannter Art aus einem kompletten Einschubteil mit einem abnehmbaren, wesentlichen, frontseitig angeordneten Teil besteht, nach dessen Abnahme die Gerätebenutzung in sichtbarer Weise unmöglich gemacht ist. Die Funktionsfähigkeit des Gerätes soll nur dann wiederhergestellt sein, wenn dieses abnehmbare Teil, welches speziell für das im Armaturenbrett verbliebene Exemplar eines festen Geräteteils bestimmt ist, wieder eingesetzt wird.

Diese Aufgabe wird erfindungsgemäß durch die kennzeichnenden Merkmale des Patentanspruchs 1 gelöst.

Einzelheiten der Erfindung werden im folgenden anhand der Zeichnungen erläutert.

Fig. 1    ist eine perspektivische Darstellung eines Auto-Rundfunkgerätes in Form eines kompletten Einschubteils,

Fig. 2    ist eine perspektivische Darstellung ähnlich der Figur 1, jedoch mit einem abgenommenen Bedienteil,

Fig. 3    ist eine vereinfachte Frontansicht auf ein vom Auto-Rundfunkgerät abgenommenes Bedienteil,

Fig. 4    ist eine Draufsicht auf das Bedienteil nach Figur 3, jedoch als Längsschnitt A-A,

Fig. 5    ist eine Rückansicht des Bedienteils nach Figur 3.

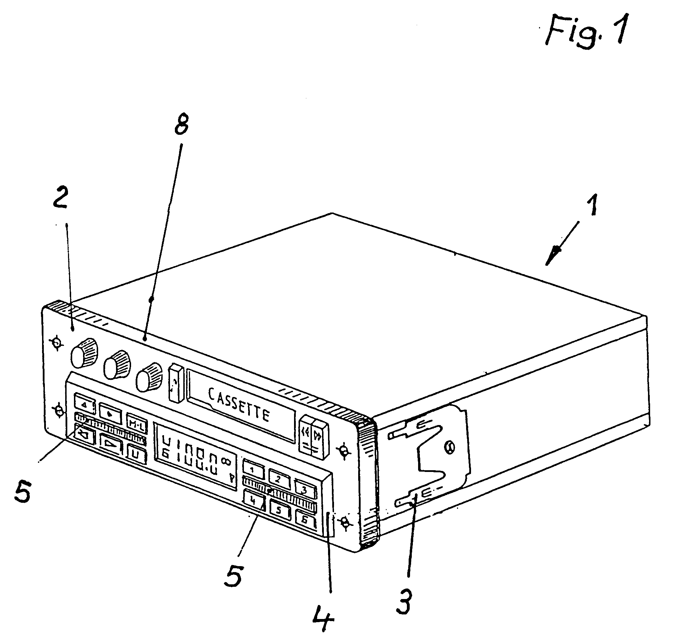

In der Figur 1 ist ein Auto-Rundfunkgerät 1 dargestellt, das als Einschubteil ausgebildet ist und frontseitig den im Armaturenbrett sichtbaren Bedienungsbereich 2 aufweist. Das Rundfunkgerät wird bei Montage in einen vorgegebenen Normausschnitt am Armaturenbrett des Kraftfahrzeugs eingeschoben und über frontseitig lösbare und beidseitig angebrachte Rastfedern 3 lagefixierend gehalten. Der Bedienungsbereich 2 des Gerätes weist vorzugsweise einen Kassettenschacht mit Bedienelementen und einige dem Rundfunkgeräteteil zugeordnete Einstelltasten auf. In der dargestellten Zeichnung sind im unteren Teil des Bedienungsbereiches 2 einige Einstelltasten des Gerätes auf einem schmalen leistenförmigen Teil zusammengefaßt, ebenso ist diesem Teil eine LCD-Anzeige zugeordnet. Das so entstandene schmale, leistenförmige Teil ist als ein vom übrigen Gerät abtrennbares Bedienteil 4 ausgebildet. Somit besteht das Auto-Rundfunkgerät 1 aus einem Geräte-Hauptteil 8 und einem abtrennbaren Geräte-Bedienteil 4. Weiterhin weist das Bedienteil beidseitig im äußeren Bereich ein Schiebeteil 5 auf, das der Verriegelung des abnehmbaren Bedienteils im Gerät dient. Mittels des Schiebeteils ist das Bedienteil auch vom Geräte-Hauptteil abzunehmen.

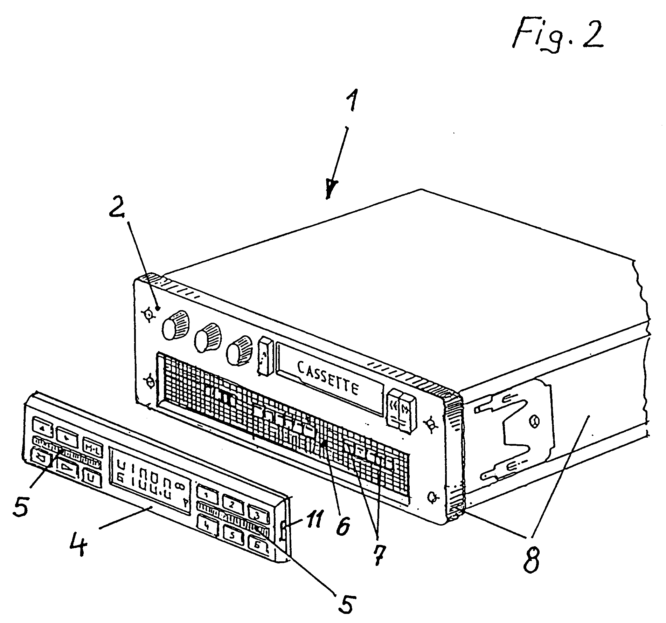

Die Figur 2 zeigt das Auto-Rundfunkgerät 1 mit aus dem Bedienungsbereich 1 abgenommenem Bedienteil 4. Das Bedienteil 4 ist ein schmales und flaches Teil und kann so direkt, oder in ein Futteral gesteckt, in jeder Hand-oder Anzugtasche aufbewahrt werden. Das Rundfunkgerät ist ohne diesem Bedienteil 4 wertlos. Das Geräte-Hauptteil 8 weist bei abgenommenem Bedienteil eine Vertiefung 6 auf, die durch eine entsprechende Farbgebung leicht erkennbar ist. In dieser Vertiefung sind Kontaktstellen in Form von Kontaktfedern 7 eingesetzt, die eine elektrisch trennbare Verbindung zum Bedienteil 4 herstellen.

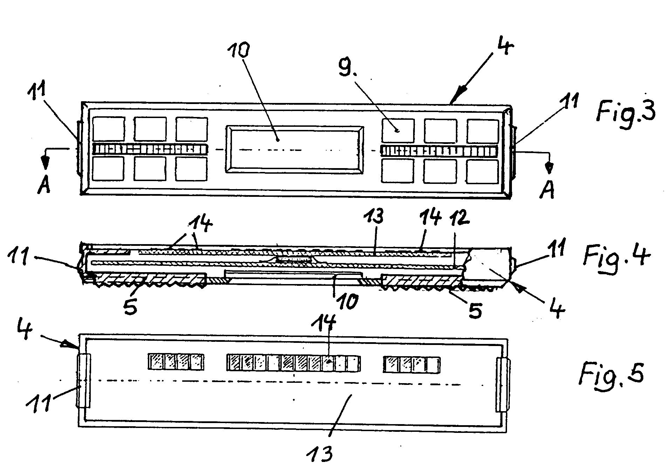

In der Figur 3 ist in schematischer Darstellung die Aufteilung der Einstelltasten 9 und der LCD-Anzeige auf dem Bedienteil 4 zu erkennen. An den beiden Schmalseiten ist ferner der Riegel 11 zu erkennen, der mit dem Schiebeteil 5 verbunden die Halterung des Geräte-Bedienteils 4 im Geräte-Hauptteil 8 gewährleistet.

Die Figur 4, die einen Längsschnitt A-A durch die lange Schmalseite des Bedienteils 4 zeigt, offenbart den Aufbau des Bedienteils, wobei eine vordere Leiterplatte 12 das LCD-Anzeigeelement mit einem Baustein als Microprozessor und die Einstelltasten trägt sowie eine rückwärtige Leiterplatte 13, die neben weiteren elektronischen Bauteilen eine bestimmte Anzahl Kontaktstellen 14 aufweist. Die Kontaktstellen 14 dienen als Kontaktanlage für die Kontaktfedern 7, die im Gerätehauptteil 8 eingesetzt sind. Die Leiterplatten 13, 14, sowie die Tasten und die beiden Schiebeteile 5 mit Riegel, sind in einem schmalen Kunststoffgehäuse zusammengefaßt. Das Schiebeteil mit dem Riegel ist vorteilhafterweise einstückig aus Kunststoff gespritzt und weist nicht näher dargestellte Scharnierverbindungen und Rastvorkehrungen auf. Über das Schiebeteil kann der verbundene Riegel 11 betätigt werden,und das Bedienteil 4 ist aus dem Geräte-Hauptteil 8 herauszunehmen. Durch leichtes Andrücken schnappt das in die Vertiefung des Geräte-Hauptteils wieder eingesetzte Bedienteil ein,und stellt zwangsläufig die erforderliche Kontaktverbindung mit dem Geräte-Hauptteil her. Mit einem der beiden Schiebeteile 5 ist der Geräte-Hauptschalter verbunden und wird somit über das Schiebeteil betätigt.
Eine programmierbare Sperrschaltung sorgt dafür, daß nur bei Verwendung eines für das jeweilige Geräte-Hauptteil 8 vorgesehenen Geräte-Bedienteils 4, die vollständige Gerätefunktion gewährleistet ist.

Die Figur 5 zeigt das Bedienteil 4 von der Rückseite her, und läßt die Kontaktstellen 14 auf der rückseitigen Leiterplatte 13 erkennen.

**Patentansprüche**

1. Auto-Rundfunkgerät (1), das als Einschubteil ausgebildet ist und mit der Bedienungsseite sichtbar im Bereich des Armaturenbretts eines Kraftfahrzeugs eingesetzt ist, bestehend aus einem Geräte-Hauptteil (8) und einem trennbaren Geräte-Bedienteil (4), wobei beide Teile mechanische und elektrische Trennstellen (11, 7, 14) aufweisen,
**dadurch gekennzeichnet,** daß das Bedienteil (4) mit dem Hauptteil (8) durch eine lösbare Verriegelung (5, 11) verbunden ist und das Rundfunkgerät einen elektronischen Baustein mit einer Programmierschaltung derart aufweist, daß das Gerät nur bei Kontaktierung des Geräte-Hauptteils (8) mit einem vorbestimmten Geräte-Bedienteil (4) funktionsfähig ist.

2. Auto-Rundfunkgerät nach Anspruch 1,
**dadurch gekennzeichnet,** daß das Bedienteil (4) frontseitig mindestens ein Schiebeteil (5) aufweist, daß das Schiebeteil seitlich oder rückseitig über einen Riegel (11) in das Geräte-Hauptteil (8) eingreift.

3. Auto-Rundfunkgerät nach einem der bisherigen Ansprüche,
**dadurch gekennzeichnet,** daß das Bedienteil (4) rückseitig verschiedene Kontaktstellen (14) aufweist, an die Kontaktfedern (7) des Geräte-Hauptteils (8) anliegen.

4. Auto-Rundfunkgerät nach einem der bisherigen Ansprüche,
**dadurch gekennzeichnet,** daß über das Schiebeteil (5) im Geräte-Bedienteil (4) ein die Stromversorgung des Gerätes unterbrechender Schalter im Geräte-Hauptteil (8) zu betätigen ist.

**Claims**

1. Car radio device (1), which is designed as a slide-in unit and is fitted with the operator side visible in the area of the dashboard of a motor vehicle, comprising a main device part (8) and a separable operator control device part (4), the two parts having mechanical and electrical separating points (11, 7, 14), characterised in that the operator control part (4) is connected to the main part (8) by a releasable interlock (5, 11) and the radio device has an electronic module with a programming circuit, such that the device is serviceable only when contact of the main device part (8) is made with a predetermined operator control device part (4).

2. Car radio device according to Claim 1, characterised in that the operator control part (4) has on the front side at least one sliding part (5), such that the sliding part engages in the main device part (8) at the side or rear by means of a locking bar (11).

3. Car radio device according to one of the preceding claims, characterised in that the operator control part (4) has on the rear various contact points (14), against which contact springs (7) of the main device part (8) bear.

4. Car radio device according to one of the preceding claims, characterised in that a switch in the main device part (8), interrupting the power supply of the device, can be actuated by means of the sliding part (5) in the operator control device part (4).

**Revendications**

1. Auto-radio (1), construit pour être un élément enfichable et qui est encastré dans la planche de bord d'un véhicule avec le côté de commande visible, comprenant une partie principale d'appareil (8) et un élément de commande (4) séparable de l'appareil, dans lequel les deux parties présentent des éléments de séparation mécanique et électrique (11, 7, 14),
caractérisé en ce que l'élément de commande (4) est relié à la partie principale (8) par l'intermédiaire d'un dispositif de verrouillage (5, 11) amovible et en ce que le récepteur radio présente un module électronique avec un circuit programmable de telle sorte que l'appareil ne soit susceptible de fonctionner que lors de l'entrée en contact de la partie principale (8) de l'appareil avec un élément de commande prédéterminé (4) de l'appareil.

2. Auto-radio selon la revendication 1, caractérisé en ce que l'élément de commande (4) présente en face avant au moins un élément coulissant (5) et en ce que l'élément coulissant s'enclenche par le côté ou par l'arrière dans la partie principale (8) de l'appareil au moyen d'un verrou (11).

3. Auto-radio selon l'une des revendications précédentes, caractérisé en ce que l'élément de commande (4) présente en face arrière plusieurs éléments de contact (14) qui reposent sur les ressorts de contact (7) de la partie principale (8) de l'appareil.

4. Auto-radio selon l'une des revendications précédentes, caractérisé en ce que, par l'intermédiaire de l'élément coulissant (5) dans l'élément de commande (4) de l'appareil, on actionne un interrupteur qui interrompt l'alimentation en courant dans la partie principale (8) de l'appareil.

Fig. 1

Fig. 2

Fig.3

Fig.4

Fig.5